# EUROPEAN PATENT APPLICATION

(11) **EP 3 739 951 A1**
(43) Date of publication of application: **18.11.2020**
(21) Application number: 18898831.5
(22) Date of filing: 08.01.2018
(51) Int. Cl.: H04W 36/00

(54) **SERVICE TRANSMISSION METHOD AND APPARATUS, AND COMPUTER STORAGE MEDIUM**

(71) Applicant: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan Guangdong 523860 (CN)
(74) Representative: Ziebig & Hengelhaupt Patent- und Rechtsanwaltskanzlei PartG mbB
(86) International application number: PCT/CN2018/071813
(87) International publication number: WO 2019/134174

(57) **Abstract**

Disclosed are a service transmission method and apparatus, and a computer storage medium. The method comprises: a network device configures a first region for a first service; the network device establishes a first connection of the first service to a terminal device; the network device transmits the first service to the terminal device based on the first connection of the first service, wherein the terminal device does not need to execute the handover process when moving in the first service region.

## Description

### TECHNICAL FIELD

The disclosure relates to the technical field of wireless communication, and particularly to a method and device for service transmission, and a computer storage medium.

### BACKGROUND

Handover in mobile communication refers to a process that mobile terminal performs service transmission with a base station, the service transmission is required to transfer from an original channel to a more suitable channel for various reasons.

For example, when the mobile terminal moves between different network regions, it is required to achieve continuity of a service between different network regions in a handover manner. However, a handover process is likely to interrupt the service, resulting in a relatively poor user experience.

### SUMMARY

For solving the technical problem, embodiments of the disclosure provide a method and device for service transmission and a computer storage medium.

The embodiments of the disclosure provide a method for service transmission, which may include the following operations.

A network device configures a first area for a first service.

The network device establishes a first connection for the first service between the network device and terminal device.

The network device performs transmission of the first service between the network device and the terminal device based on the first connection for the first service, the terminal device being not required to perform a handover process when moving within the first service area.

In the embodiments of the disclosure, the method may further include the following operation.

The network device configures a first connection corresponding to the first service.

In the embodiments of the disclosure, the method may further include the following operations.

If the first connection for the first service is established between the network device and the terminal device, at least one of area information corresponding to the first service or link configuration information corresponding to the first service are/is determined according to a service attribute of the first service.

The network device sends the at least one of the area information corresponding to the first service or the link configuration information corresponding to the first service to the terminal device.

In the embodiments of the disclosure, the area information may include at least one of:

registration area list information, tracking area list information, cell list information, frequency list information, access network paging area list information, service area information or network slice information.

In the embodiments of the disclosure, the link configuration information may include at least one of:
air interface resource configuration information, inter-network-device link configuration information, security configuration information and non-access stratum configuration information.

In the embodiments of the disclosure, the operation that the network device sends the at least one of the area information corresponding to the first service or the link configuration information corresponding to the first service to the terminal device may include the following operations.

The network device receives a request message for the at least one of the area information corresponding to the first service or the link configuration information from the terminal device.

The network device sends the at least one of the area information corresponding to the first service or the link configuration information corresponding to the first service to the terminal device.

In the embodiments of the disclosure, the operation that the network device sends the at least one of the area information corresponding to the first service or the link configuration information corresponding to the first service to the terminal device may include the following operations.

The network device sends broadcast information, the broadcast information carrying the at least one of the area information corresponding to the first service or the link configuration information corresponding to the first service, to enable the terminal device to receive the at least one of the area information corresponding to the first service or the link configuration information corresponding to the first service in the broadcast information.

In the embodiments of the disclosure, the link configuration information may be valid in the first area corresponding to the area information.

In the embodiments of the disclosure, the operation that the network device configures the first area for the first service may include the following operations.

The network device receives a request message for creating a service area for the first service from the terminal device.

The network device configures the first area for the first service according to attribute information of the terminal device.

In the embodiments of the disclosure, the attribute information of the terminal device may include at least one of:
terminal rank information, terminal type information, attribute information of the first service, the network slice information or terminal mobility information.

The embodiments of the disclosure provide a method for service transmission, which may include the following operations.

Terminal device establishes a first connection for a first service between the terminal device and a network device, a service area of the first service being a first area.

The terminal device performs transmission of the first service between the terminal device and the network device in the first area based on the first connection for the first service, the terminal device being not required to perform a handover process when moving within the first service area.

In the embodiments of the disclosure, the method may further include the following operation.

If the first connection for the first service is established between the terminal device and the network device, the terminal device receives at least one of area information corresponding to the first service or link configuration information corresponding to the first service from the network device.

In the embodiments of the disclosure, the area information may include at least one of:
registration area list information, tracking area list information, cell list information, frequency list information, access network paging area list information, service area information or network slice information.

In the embodiments of the disclosure, the link configuration information may include at least one of:
air interface resource configuration information, inter-network-device link configuration information, security configuration information or non-access stratum configuration information.

In the embodiments of the disclosure, the operation that the terminal device receives the at least one of the area information corresponding to the first service or the link configuration information corresponding to the first service from the network device may include the following operations.

The terminal device sends a request message for link configuration for the at least one of the area information corresponding to the first service or the link configuration information to the network device.

The terminal device receives the at least one of the area information corresponding to the first service or the link configuration information corresponding to the first service from the network device.

In the embodiments of the disclosure, the operation that the terminal device receives the at least one of the area information corresponding to the first service or the link configuration information corresponding to the first service from the network device may include the following operations.

The terminal device receives broadcast information sent by the network device, the broadcast information carrying the at least one of the area information corresponding to the first service or the link configuration information corresponding to the first service.

The terminal device acquires the at least one of the area information corresponding to the first service or the link configuration information corresponding to the first service in the broadcast information.

In the embodiments of the disclosure, the link configuration information may be valid in the first area corresponding to the area information.

In the embodiments of the disclosure, the method may further include the following operation.

After the terminal device receives the link configuration information corresponding to the first service from the network device, the terminal device stores the link configuration information corresponding to the first service.

In the embodiments of the disclosure, the method may further include the following operation.

When the terminal device is within the first area, the terminal device performs the transmission of the first service between the terminal device and the network device by use of the locally stored link configuration information, or receives updated link configuration information sent by the network device and performs the transmission of the first service between the terminal device and the network device based on the updated link configuration information.

In the embodiments of the disclosure, the method may further include the following operation.

When the terminal device moves out of the first area, the stored link configuration information corresponding to the first service is deleted.

In the embodiments of the disclosure, the method may further include the following operation.

The terminal device sends a request message for creating a service area for the first service to the network device such that the network device configures the first area for the first service according to attribute information of the terminal device.

In the embodiments of the disclosure, the attribute information of the terminal device may include at least one of:
terminal rank information, terminal type information, attribute information of the first service, the network slice information or terminal mobility information.

The embodiments of the disclosure provide a device for service transmission, which may be applied to a network device and include a configuration unit, an establishment unit and a communication unit.

The configuration unit may be configured to configure a first area for a first service.

The establishment unit may be configured to establish a first connection for the first service between the network device and terminal device.

The communication unit may be configured to perform transmission of the first service between the network device and the terminal device based on the first connection for the first service, the terminal device being not required to perform a handover process when moving within the first service area.

In the embodiments of the disclosure, the configuration unit may further be configured to configure a first connection corresponding to the first service.

In the embodiments of the disclosure, the device may further include a determination unit and a sending unit.

The determination unit may be configured to determine at least one of area information corresponding to the first service or link configuration information corresponding to the first service according to a service attribute of the first service.

The sending unit may be configured to send the at least one of the area information corresponding to the first service or the link configuration information corresponding to the first service to the terminal device.

In the embodiments of the disclosure, the area information may include at least one of:
registration area list information, tracking area list information, cell list information, frequency list information, access network paging area list information, service area information or network slice information.

In the embodiments of the disclosure, the link configuration information may include at least one of:
air interface resource configuration information, inter-network-device link configuration information, security configuration information or non-access stratum configuration information.

In the embodiments of the disclosure, the sending unit may be configured to receive a request message for the at least one of the area information corresponding to the first service or the link configuration information from the terminal device and send the at least one of the area information corresponding to the first service or the link configuration information corresponding to the first service to the terminal device.

In the embodiments of the disclosure, the sending unit may be configured to send broadcast information, the broadcast information carrying the at least one of the area information corresponding to the first service or the link configuration information corresponding to the first service, to enable the terminal device to receive the at least one of the area information corresponding to the first service or the link configuration information corresponding to the first service in the broadcast information.

In the embodiments of the disclosure, the link configuration information may be valid in the first area corresponding to the area information.

In the embodiments of the disclosure, the configuration unit may be configured to receive a request message for creating a service area for the first service from the terminal device and configure the first area for the first service according to attribute information of the terminal device.

In the embodiments of the disclosure, the attribute information of the terminal device may include at least one of:
terminal rank information, terminal type information, attribute information of the first service, the network slice information or terminal mobility information.

The embodiments of the disclosure provide a device for service transmission, which may be applied to terminal device and include an establishment unit and a communication unit.

The establishment unit may be configured to establish a first connection for a first service between the terminal device and a network device, a service area of the first service being a first area.

The communication unit may be configured to perform transmission of the first service between the terminal device and the network device in the first area based on the first connection for the first service, the terminal device being not required to perform a handover process when moving within the first service area.

In the embodiments of the disclosure, the device may further include a receiving unit.

The receiving unit may be configured to receive at least one of area information corresponding to the first service or link configuration information corresponding to the first service from the network device.

In the embodiments of the disclosure, the area information may include at least one of:
registration area list information, tracking area list information, cell list information, frequency list information, access network paging area list information, service area information or network slice information.

In the embodiments of the disclosure, the link configuration information may include at least one of:
air interface resource configuration information, inter-network-device link configuration information, security configuration information or non-access stratum configuration information.

In the embodiments of the disclosure, the receiving unit may be configured to send a request message for link configuration for the at least one of the area information corresponding to the first service or the link configuration information to the network device and receive the at least one of the area information corresponding to the first service or the link configuration information corresponding to the first service from the network device.

In the embodiments of the disclosure, the receiving unit may be configured to receive broadcast information sent by the network device, the broadcast information carrying the at least one of the area information corresponding to the first service or the link configuration information corresponding to the first service, and acquire the at least one of the area information corresponding to the first service or the link configuration information corresponding to the first service in the broadcast information.

In the embodiments of the disclosure, the link configuration information may be valid in the first area corresponding to the area information.

In the embodiments of the disclosure, the device may further include a storage unit.

The storage unit may be configured to, after the link configuration information corresponding to the first service is received from the network device, store the link configuration information corresponding to the first service.

In the embodiments of the disclosure, the communication unit may be configured to, when the terminal device is within the first area, perform the transmission of the first service between the terminal device and the network device by use of the locally stored link configuration information, or receive updated link configuration information sent by the network device and perform the transmission of the first service between the terminal device and the network device based on the updated link configuration information.

In the embodiments of the disclosure, the storage unit may further be configured to, when the terminal device moves out of the first area, delete the stored link configuration information corresponding to the first service.

In the embodiments of the disclosure, the device may further include a service area request unit.

The service area request unit may be configured to send a request message for creating a service area for the first service to the network device such that the network device configures the first area for the first service according to attribute information of the terminal device.

In the embodiments of the disclosure, the attribute information of the terminal device may include at least one of:
terminal rank information, terminal type information, attribute information of the first service, the network slice information or terminal mobility information.

The embodiments of the disclosure provide a computer storage medium having stored therein computer-executable instructions that when executed by a processor to implement the method for service transmission.

In the technical solutions of the embodiments of the disclosure, the network device configures the first area for the first service; the network device establishes the first connection for the first service between the network device and the terminal device; and the network device performs transmission of the first service between the network device and the terminal device based on the first connection for the first service, the terminal device being not required to perform the handover process when moving within the first area. With adoption of the technical solutions of the embodiments of the disclosure, a specific service area is configured for a specific service, and terminal device performing transmission of the specific service, when moving in the specific service area, is not required to perform a handover process, so that continuity of the service may be ensured, and a user experience is improved.

### BRIEF DESCRIPTION OF THE DRAWINGS

The drawings described herein are adopted to provide a further understanding to the disclosure and form a part of the application. Schematic embodiments of the disclosure and descriptions thereof are adopted to explain the disclosure and not intended to form improper limits to the disclosure. In the drawings:
FIG. 1 is a system architecture diagram of a 5th-Generation (5G) network according to an embodiment of the disclosure;
FIG. 2 is a system architecture diagram of a 4th-Generation (4G) network according to an embodiment of the disclosure;
FIG. 3 is a first flowchart of a method for service transmission according to an embodiment of the disclosure;
FIG. 4 is a second flowchart of a method for service transmission according to an embodiment of the disclosure;
FIG. 5 is a first structure composition diagram of a device for service transmission according to an embodiment of the disclosure;
FIG. 6 is a second structure composition diagram of a device for service transmission according to an embodiment of the disclosure; and
FIG. 7 is a structure composition diagram of a computer device according to an embodiment of the disclosure.

### DETAILED DESCRIPTION

For making the characteristics and technical contents of the embodiments of the disclosure understood in more detail, implementation of the embodiments of the disclosure will be described below in combination with the drawings in detail. The drawings are only adopted for description as references and not intended to limit the embodiments of the disclosure.

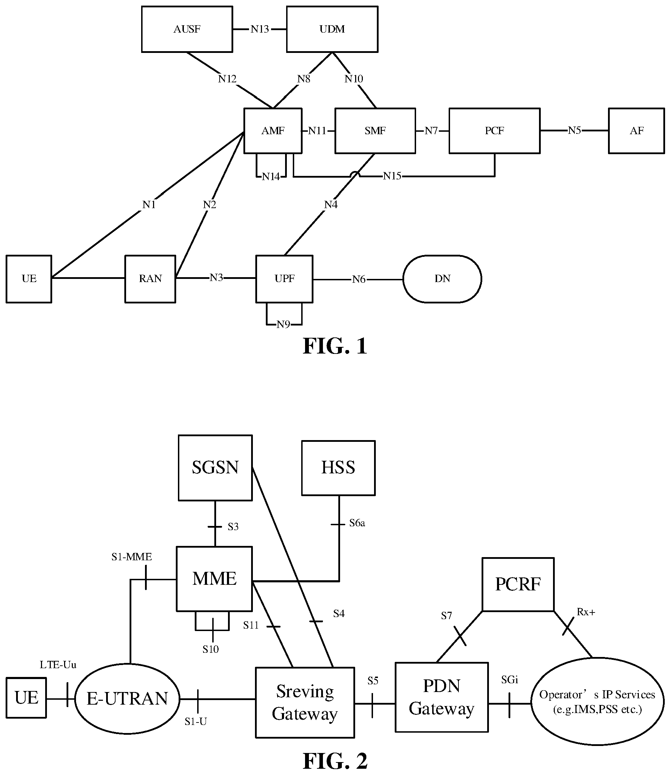

FIG. 1 is a system architecture diagram of a 5G network according to an embodiment of the disclosure. As illustrated in FIG. 1, devices involved in a 5G network system include:

User Equipment (UE), a Radio Access Network (RAN), a User Plane Function (UPF), a Data Network (DN), a Core Access and Mobility Management Function (AMF), a Session Management Function (SMF), a Policy Control Function (PCF), an Application Function (AF), an Authentication Server Function (AUSF) and Unified Data Management (UDM).

FIG. 2 is a system architecture diagram of a 4G network according to an embodiment of the disclosure. As illustrated in FIG. 2, devices involved in a 4G network system include:

UE, an Evolved Universal Terrestrial Radio Access Network (E-UTRAN), a Mobility Management Entity (MME) network element, a Serving General Packet Radio Service (GPRS) Support Node (SGSN), a Home Subscriber Server (HSS), a serving gateway, a Packet Data Network (PDN) gateway and a Policy and Charging Rules Function (PCRF).

The examples of FIG. 1 and FIG. 2 are only cases of network architectures implementing the embodiments of the disclosure. The embodiments of the disclosure are not limited to the network structures of FIG. 1 and FIG. 2.

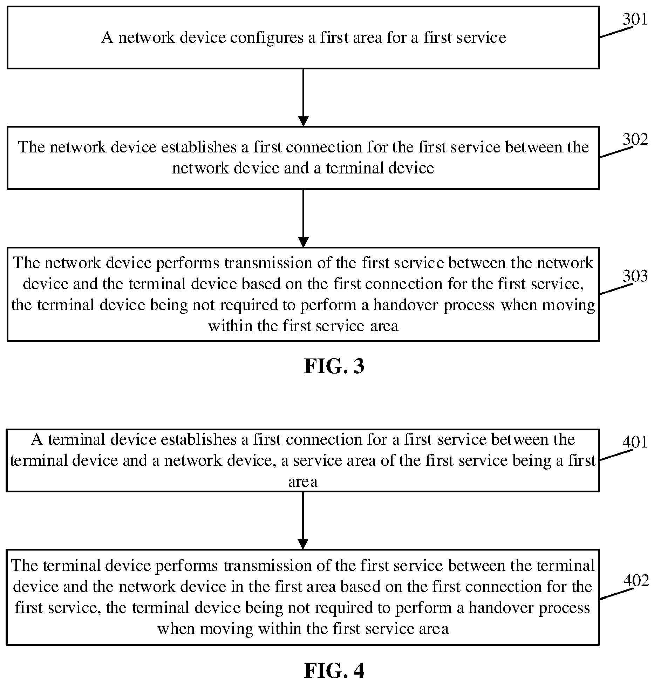

FIG. 3 is a first flowchart of a method for service transmission according to an embodiment of the disclosure. As illustrated in FIG. 3, the service transmission method includes the following steps.

In 301, a network device configures a first area for a first service.

In an embodiment of the disclosure, the network device configures a specific service area for a specific service. For example, the network device configures the first area for the first service. It is to be understood that the network device may also configure areas for other services, for example, configuring a second service area for a second service and configuring a third service area for a third service.

In an embodiment of the disclosure, the network device configures a first connection corresponding to the first service in the first area. Herein, the first connection for the first service has the following characteristic: the terminal device executing the first service is not required to perform a handover process when moving within the first area, so that continuity of the service is ensured.

In an implementation, the network device receives a request message for creating a service area for the first service from the terminal device; and the network device configures the first area for the first service according to attribute information of the terminal device.

Herein, the attribute information of the terminal device includes at least one of:
terminal rank information, terminal type information, attribute information of the first service, network slice information or terminal mobility information.

In 302, the network device establishes a first connection for the first service between the network device and terminal device.

In an embodiment of the disclosure, if the first connection for the first service is established between the network device and the terminal device, at least one of area information corresponding to the first service or link configuration information corresponding to the first service are/is determined according to a service attribute of the first service; and the network device sends the at least one of the area information corresponding to the first service or the link configuration information corresponding to the first service to the terminal device.

In an implementation, the area information includes at least one of:
registration area list information, tracking area list information, cell list information, frequency list information, access network paging area list information, service area information or the network slice information.

In the solution, the area information may be continuous area information and may also be discontinuous area information.

In an implementation, the link configuration information includes at least one of:
air interface resource configuration information, inter-network-device link configuration information, security configuration information or non-access stratum configuration information.

In an embodiment of the disclosure, the operation that the network device sends the at least one of the area information corresponding to the first service or the link configuration information corresponding to the first service to the terminal device may be implemented through the following manners.

In a first manner: the network device receives a request message for the at least one of the area information corresponding to the first service or the link configuration information from the terminal device; and the network device sends the at least one of the area information corresponding to the first service or the link configuration information corresponding to the first service to the terminal device.

In a second manner: the network device sends broadcast information, the broadcast information carrying the at least one of the area information corresponding to the first service or the link configuration information corresponding to the first service, to enable the terminal device to receive the at least one of the area information corresponding to the first service or the link configuration information corresponding to the first service in the broadcast information.

In an embodiment of the disclosure, the link configuration information is valid in the first area corresponding to the area information.

In an embodiment of the disclosure, the terminal device may acquire the link configuration information corresponding to the first service through the first manner or the second manner. In an implementation, the link configuration information corresponding to the first service is updated, the terminal device may acquire the updated link configuration information corresponding to the first service through the first manner or the second manner again.

For example, when the terminal device moves into the first area, the link configuration information corresponding to the first service is acquired through the first manner, and then the link configuration information corresponding to the first service is periodically updated through the second manner.

In 303, the network device performs transmission of the first service between the network device and the terminal device based on the first connection for the first service, the terminal device being not required to perform a handover process when moving within the first service area.

In an embodiment of the disclosure, when the terminal device moves into a network in the first service area, the stored link configuration information is adopted for communication with the network, or a new link configuration is received through the broadcast information in the network and the new link configuration is adopted for communication with the network.

FIG. 4 is a second flowchart of a method for service transmission according to an embodiment of the disclosure. As illustrated in FIG. 4, the service transmission method includes the following steps.

In 401, a terminal device establishes a first connection for a first service between the terminal device and a network device, a service area of the first service being a first area.

In an embodiment of the disclosure, if the first connection for the first service is established between the terminal device and the network device, at least one of area information corresponding to the first service or link configuration information corresponding to the first service are/is received from the network device.

In an implementation, the area information includes at least one of:
registration area list information, tracking area list information, cell list information, frequency list information, access network paging area list information, service area information or network slice information.

In an implementation, the link configuration information includes at least one of:
air interface resource configuration information, inter-network-device link configuration information, security configuration information or non-access stratum configuration information.

In the solution, the operation that the terminal device receives the at least one of the area information corresponding to the first service or the link configuration information corresponding to the first service from the network device may be implemented through the following manners.

In a first manner: the terminal device sends a request message for link configuration for the at least one of the area information corresponding to the first service or the link configuration information to the network device; and the terminal device receives the at least one of the area information corresponding to the first service or the link configuration information corresponding to the first service from the network device.

In a second manner: the terminal device receives broadcast information sent by the network device, the broadcast information carrying the at least one of the area information corresponding to the first service or the link configuration information corresponding to the first service; and the terminal device acquires the at least one of the area information corresponding to the first service or the link configuration information corresponding to the first service in the broadcast information.

In an embodiment of the disclosure, the link configuration information is valid in the first area corresponding to the area information.

In an implementation, the method further includes the following operation.

After the terminal device receives the link configuration information corresponding to the first service from the network device, the link configuration information corresponding to the first service is stored.

Based on this, when the terminal device is within the first area, the transmission of the first service between the terminal device and the network device is performed by use of the locally stored link configuration information, or updated link configuration information sent by the network device is received and the transmission of the first service between the terminal device and the network device is performed based on the updated link configuration information.

In addition, when the terminal device moves out of the first area, the stored link configuration information corresponding to the first service is deleted. When the terminal device moves into a second service area, link configuration information corresponding to a second service is acquired through the first manner or the second manner. It is to be understood that a service area of the second service is the second service area.

For example, when the terminal device is within the first area, the locally stored link configuration information is adopted to perform transmission of the first service between the terminal device and the network device, and after the updated link configuration information is acquired through the first manner or the second manner, the original link configuration information is replaced with the updated link configuration information and then the transmission of the first service between the terminal device and the network device may be performed based on the updated link configuration information.

In 402, the terminal device performs transmission of the first service between the terminal device and the network device in the first area based on the first connection for the first service, the terminal device being not required to perform a handover process when moving within the first service area.

In an embodiment of the disclosure, the terminal device, when creating the service, may request the network device to provide a corresponding service area (the first area) for the created service (i.e., the first service). Specifically, the terminal device sends a request message for creating a service area for the first service to the network device such that the network device configures the first area for the first service according to attribute information of the terminal device. In an implementation, the attribute information of the terminal device includes at least one of: terminal rank information, terminal type information, attribute information of the first service, the network slice information or terminal mobility information.

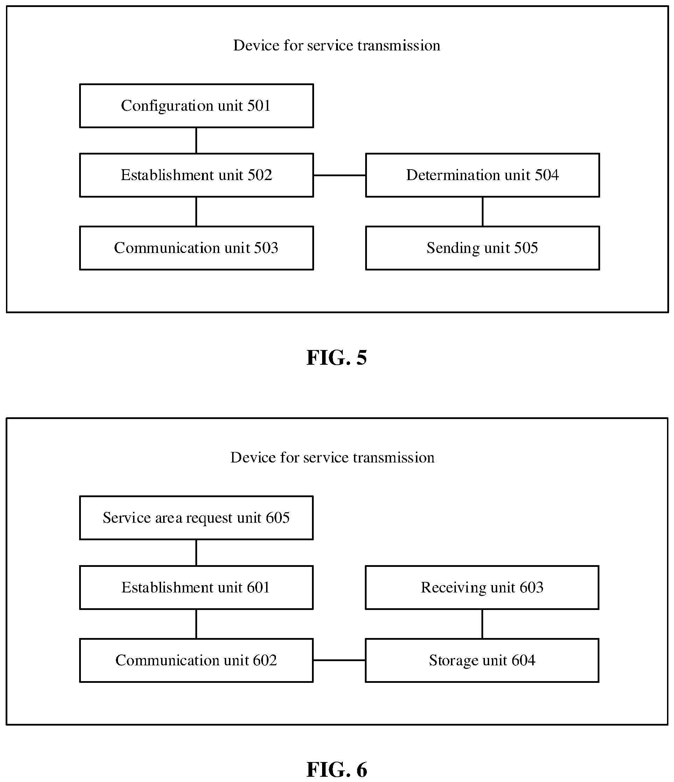

FIG. 5 is a first structure composition diagram of a device for service transmission according to an embodiment of the disclosure. The service transmission device of the embodiment is applied to a network device. As illustrated in FIG. 5, the service transmission device includes a configuration unit 501, an establishment unit 502 and a communication unit 503.

The configuration unit 501 is configured to configure a first area for a first service.

The establishment unit 502 is configured to establish a first connection for the first service between the network device and terminal device.

The communication unit 503 is configured to perform transmission of the first service between the network device and the terminal device based on the first connection for the first service, the terminal device being not required to perform a handover process when moving within the first service area.

In an implementation, the configuration unit 501 is further configured to configure a first connection corresponding to the first service.

In an implementation, the device further includes a determination unit 504 and a sending unit 505.

The determination unit 504 is configured to determine at least one of area information corresponding to the first service or link configuration information corresponding to the first service according to a service attribute of the first service.

The sending unit 505 is configured to send the at least one of the area information corresponding to the first service or the link configuration information corresponding to the first service to the terminal device.

In an implementation, the area information includes at least one of:
registration area list information, tracking area list information, cell list information, frequency list information, access network paging area list information, service area information or network slice information.

In an implementation, the link configuration information includes at least one of:
air interface resource configuration information, inter-network-device link configuration information, security configuration information or non-access stratum configuration information.

In an implementation, the sending unit 505 is configured to receive a request message for the at least one of the area information corresponding to the first service or the link configuration information from the terminal device and send the at least one of the area information corresponding to the first service or the link configuration information corresponding to the first service to the terminal device.

In an implementation, the sending unit 505 is configured to send broadcast information, the broadcast information carrying the at least one of the area information corresponding to the first service or the link configuration information corresponding to the first service, to enable the terminal device to receive the at least one of the area information corresponding to the first service or the link configuration information corresponding to the first service in the broadcast information.

In an embodiment of the disclosure, the link configuration information is valid in the first area corresponding to the area information.

In an implementation, the configuration unit 501 is configured to receive a request message for creating a service area for the first service from the terminal device and configure the first area for the first service according to attribute information of the terminal device.

In an implementation, the attribute information of the terminal device includes at least one of:
terminal rank information, terminal type information, attribute information of the first service, the network slice information or terminal mobility information.

Those skilled in the art should know that functions realized by each unit in the device for service transmission illustrated in FIG. 5 can be understood with reference to related descriptions about the method for service transmission. The functions of each unit in the device for service transmission illustrated in FIG. 5 may be realized through a program running in a processor, and may also be realized through a specific logical circuit.

FIG. 6 is a second structure composition diagram of a device for service transmission according to an embodiment of the disclosure. The service transmission device of the embodiment is applied to terminal device. As illustrated in FIG. 6, the device for service transmission includes an establishment unit 601 and a communication unit 602.

The establishment unit 601 is configured to establish a first connection for a first service between the terminal device and a network device, a service area of the first service being a first area.

The communication unit 602 is configured to perform transmission of the first service between the terminal device and the network device in the first area based on the first connection for the first service, the terminal device being not required to perform a handover process when moving within the first service area.

In an implementation, the device further includes a receiving unit 603.

The receiving unit 603 is configured to receive at least one of area information corresponding to the first service or link configuration information corresponding to the first service from the network device.

In an implementation, the area information includes at least one of:
registration area list information, tracking area list information, cell list information, frequency list information, access network paging area list information, service area information or network slice information.

In an implementation, the link configuration information includes at least one of:
air interface resource configuration information, inter-network-device link configuration information, security configuration information or non-access stratum configuration information.

In an implementation, the receiving unit 603 is configured to send a request message for link configuration for the at least one of the area information corresponding to the first service or the link configuration information to the network device and receive the at least one of the area information corresponding to the first service or the link configuration information corresponding to the first service in the network device.

In an implementation, the receiving unit 603 is configured to receive broadcast information sent by the network device, the broadcast information carrying the at least one of the area information corresponding to the first service or the link configuration information corresponding to the first service, and acquire the at least one of the area information corresponding to the first service or the link configuration information corresponding to the first service in the broadcast information.

In an embodiment of the disclosure, the link configuration information is valid in the first area corresponding to the area information.

In an implementation, the device further includes a storage unit 604.

The storage unit 604 is configured to, after the link configuration information corresponding to the first service is received from the network device, store the link configuration information corresponding to the first service.

In an implementation, the communication unit 602 is configured to, when the terminal device is within the first area, perform the transmission of the first service between the terminal device and the network device by use of the locally stored link configuration information, or receive updated link configuration information sent by the network device and perform the transmission of the first service between the terminal device and the network device based on the updated link configuration information.

In an implementation, the storage unit 604 is further configured to, when the terminal device moves out of the first area, delete the stored link configuration information corresponding to the first service.

In an implementation, the device further includes a service area request unit 605.

The service area request unit 605 is configured to send a request message for creating a service area for the first service to the network device such that the network device configures the first area for the first service according to attribute information of the terminal device.

In an implementation, the attribute information of the terminal device includes at least one of:
terminal rank information, terminal type information, attribute information of the first service, the network slice information or terminal mobility information.

Those skilled in the art should know that functions realized by each unit in the service transmission device illustrated in FIG. 6 can be understood with reference to related descriptions about the service transmission method. The functions of each unit in the service transmission device illustrated in FIG. 6 may be realized through a program running in a processor, and may also be realized through a specific logical circuit.

When being implemented in form of software functional module and sold or used as an independent product, the device for service transmission of the embodiments of the disclosure may also be stored in a computer-readable storage medium. Based on such an understanding, the technical solutions of the embodiments of the disclosure substantially or parts making contributions to the conventional art may be embodied in form of software product, and the computer software product is stored in a storage medium, including a plurality of instructions configured to enable a computer device (which may be a personal computer, a server, a network device or the like) to perform all or part of the method in each embodiment of the disclosure. The storage medium includes: various media capable of storing program codes such as a U disk, a mobile hard disk, a Read Only Memory (ROM), a magnetic disk or an optical disk. Therefore, the embodiments of the disclosure are not limited to any specific hardware and software combination.

Correspondingly, the embodiments of the disclosure also provide a computer storage medium having stored therein computer-executable instructions that when executed by a processor, implement the method for service transmission of the embodiments of the disclosure.

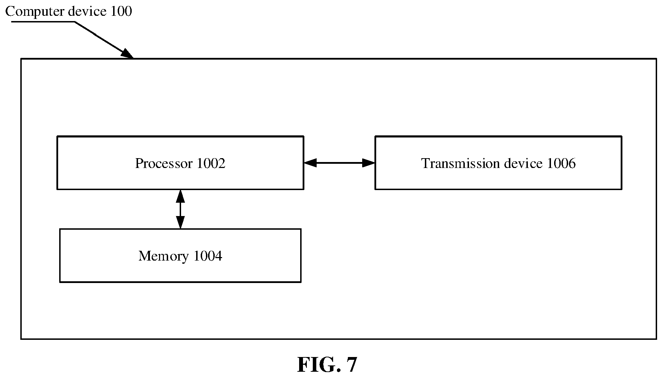

FIG. 7 is a structure composition diagram of a computer device according to an embodiment of the disclosure. The computer device may be terminal device and may also be a network device. As illustrated in FIG. 7, the computer device 100 may include one or more (only one is illustrated in the figure) processors 1002 (the processor 1002 may include, but not limited to, a processing device such as a Micro Control Unit (MCU) or a Field Programmable Gate Array (FPGA)), a memory 1004 configured to store data and a transmission device 1006 configured for a communication function. Those of ordinary skill in the art should know that the structure illustrated in FIG. 7 is only schematic and not intended to limit the structure of the electronic device. For example, the computer device 100 may further include components more or fewer than the components illustrated in FIG. 7 or has a configuration different from that illustrated in FIG. 7.

The memory 1004 may be configured to store a software program of application software and a module, for example, a program instruction/module corresponding to a method in the embodiments of the disclosure. The processor 1002 runs the software program and module stored in the memory 1004, thereby executing various functional applications and data processing, namely implementing the abovementioned method. The memory 1004 may include a high-speed random access memory and may also include a nonvolatile memory, for example, one or more magnetic storage devices, flash memories or other nonvolatile solid-state memories. In some examples, the memory 1004 may further include a memory arranged remotely relative to the processor 1002 and the remote memory may be connected to the computer device 100 through a network. An example of the network includes, but not limited to, the Internet, an intranet, a local area network, a mobile communication network and a combination thereof.

The transmission device 1006 is configured to receive or send data through a network. A specific example of the network may include a wireless network provided by a communication provider of the computer device 100. In an example, the transmission device 1006 includes a Network Interface Controller (NIC), which may be connected with another network device through a base station, thereby communicating with the Internet. In an example, the transmission device 1006 may be a Radio Frequency (RF) module, configured to communicate with the Internet in a wireless manner.

The technical solutions recorded in the embodiments of the disclosure may be freely combined without conflicts.

In some embodiments provided by the disclosure, it is to be understood that the disclosed method and intelligent device may be implemented in another manner. The device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part of all of the units may be selected according to a practical requirement to achieve the purposes of the solutions of the embodiments.

In addition, each functional unit in each embodiment of the disclosure may be integrated into a second processing unit, each unit may also serve as an independent unit and two or more than two units may also be integrated into a unit. The integrated unit may be implemented in a hardware form and may also be implemented in form of hardware and software functional unit.

[**00198]** The above is only the specific implementation of the disclosure and not intended to limit the scope of protection of the disclosure. Any variations or replacements apparent to those skilled in the art within the technical scope disclosed by the disclosure shall fall within the scope of protection of the disclosure.

## Claims

1. A method for service transmission, comprising:
configuring, by a network device, a first area for a first service;
establishing, by the network device, a first connection for the first service between the network device and a terminal device; and
performing, by the network device, transmission of the first service between the network device and the terminal device based on the first connection for the first service, the terminal device being not required to perform a handover process when moving within the first service area.

2. The method of claim 1, further comprising:
configuring, by the network device, a first connection corresponding to the first service.

3. The method of claim 1, further comprising:
if the first connection for the first service is established between the network device and the terminal device, determining at least one of area information corresponding to the first service or link configuration information corresponding to the first service according to a service attribute of the first service; and
sending, by the network device, the at least one of the area information corresponding to the first service or the link configuration information corresponding to the first service to the terminal device.

4. The method of claim 3, wherein the area information comprises at least one of:
registration area list information, tracking area list information, cell list information, frequency list information, access network paging area list information, service area information or network slice information.

5. The method of claim 3 or 4, wherein the link configuration information comprises at least one of:
air interface resource configuration information, inter-network-device link configuration information, security configuration information or non-access stratum configuration information.

6. The method of any one of claims 3-5, wherein sending, by the network device, the at least one of the area information corresponding to the first service or the link configuration information corresponding to the first service to the terminal device comprises:
receiving, by the network device, a request message for the at least one of the area information or the link configuration information from the terminal device; and
sending, by the network device, the at least one of the area information corresponding to the first service or the link configuration information corresponding to the first service to the terminal device.

7. The method of any one of claims 3-5, wherein sending, by the network device, the at least one of the area information corresponding to the first service or the link configuration information corresponding to the first service to the terminal device comprises:
sending, by the network device, broadcast information, the broadcast information carrying the at least one of the area information corresponding to the first service or the link configuration information corresponding to the first service, to enable the terminal device to receive the at least one of the area information corresponding to the first service or the link configuration information corresponding to the first service in the broadcast information.

8. The method of any one of claims 3-7, wherein the link configuration information is valid in the first area corresponding to the area information.

9. The method of any one of claims 1-8, wherein configuring, by the network device, the first area for the first service comprises:
receiving, by the network device, a request message for creating a service area for the first service from the terminal device; and
configuring, by the network device, the first area for the first service according to attribute information of the terminal device.

10. The method of claim 9, wherein the attribute information of the terminal device comprises at least one of:
terminal rank information, terminal type information, attribute information of the first service, the network slice information or terminal mobility information.

11. A method for service transmission, comprising:
establishing, by a terminal device, a first connection for a first service between the terminal device and a network device, a service area of the first service being a first area; and
performing, by the terminal device, transmission of the first service between the terminal device and the network device in the first area based on the first connection for the first service, the terminal device being not required to perform a handover process when moving within the first service area.

12. The method of claim 11, further comprising:
if the first connection for the first service is established between the terminal device and the network device, receiving, by the terminal device, at least one of area information corresponding to the first service or link configuration information corresponding to the first service from the network device.

13. The method of claim 12, wherein the area information comprises at least one of:
registration area list information, tracking area list information, cell list information, frequency list information, access network paging area list information, service area information or network slice information.

14. The method of claim 12 or 13, wherein the link configuration information comprises at least one of:
air interface resource configuration information, inter-network-device link configuration information, security configuration information or non-access stratum configuration information.

15. The method of any one of claims 12-14, wherein receiving, by the terminal device, the at least one of the area information corresponding to the first service or the link configuration information corresponding to the first service from the network device comprises:
sending, by the terminal device, a request message for link configuration for the at least one of the area information or the link configuration information to the network device; and
receiving, by the terminal device, the at least one of the area information corresponding to the first service or the link configuration information corresponding to the first service from the network device.

16. The method of any one of claims 12-14, wherein receiving, by the terminal device, the at least one of the area information corresponding to the first service or the link configuration information corresponding to the first service from the network device comprises:
receiving, by the terminal device, broadcast information from the network device, the broadcast information carrying the at least one of the area information corresponding to the first service or the link configuration information corresponding to the first service; and
acquiring, by the terminal device, the at least one of the area information corresponding to the first service or the link configuration information corresponding to the first service in the broadcast information.

17. The method of any one of claims 12-16, wherein the link configuration information is valid in the first area corresponding to the area information.

18. The method of any one of claims 12-17, further comprising:
after the terminal device receives the link configuration information corresponding to the first service from the network device, storing, by the terminal device, the link configuration information corresponding to the first service.

19. The method of claim 18, further comprising:
when the terminal device is within the first area:
performing, by the terminal device, the transmission of the first service between the terminal device and the network device by using the locally stored link configuration information, or
receiving, by the terminal device, updated link configuration information from the network device, and performing, by the terminal device, the transmission of the first service between the terminal device and the network device based on the updated link configuration information.

20. The method of claim 18 or 19, further comprising:
when the terminal device moves out of the first area, deleting the stored link configuration information corresponding to the first service.

21. The method of any one of claims 11-20, further comprising:
sending, by the terminal device, a request message for creating a service area for the first service to the network device such that the network device configures the first area for the first service according to attribute information of the terminal device.

22. The method of claim 21, wherein the attribute information of the terminal device comprises at least one of:
terminal rank information, terminal type information, attribute information of the first service, the network slice information or terminal mobility information.

23. A device for service transmission, applied to a network device and comprising:
a configuration unit, configured to configure a first area for a first service;
an establishment unit, configured to establish a first connection for the first service between the network device and a terminal device; and
a communication unit, configured to perform transmission of the first service between the network device and the terminal device based on the first connection for the first service, the terminal device being not required to perform a handover process when moving within the first service area.

24. The device of claim 23, wherein the configuration unit is further configured to configure a first connection corresponding to the first service.

25. The device of claim 23, further comprising:
a determination unit, configured to determine at least one of area information corresponding to the first service or link configuration information corresponding to the first service according to a service attribute of the first service; and
a sending unit, configured to send the at least one of the area information corresponding to the first service or the link configuration information corresponding to the first service to the terminal device.

26. The device of claim 25, wherein the area information comprises at least one of:
registration area list information, tracking area list information, cell list information, frequency list information, access network paging area list information, service area information or network slice information.

27. The device of claim 25 or 26, wherein the link configuration information comprises at least one of:
air interface resource configuration information, inter-network-device link configuration information, security configuration information or non-access stratum configuration information.

28. The device of any one of claims 25-27, wherein the sending unit is configured to: receive a request message for the at least one of the area information or the link configuration information from the terminal device, and send the at least one of the area information corresponding to the first service or the link configuration information corresponding to the first service to the terminal device.

29. The device of any one of claims 25-27, wherein the sending unit is configured to send broadcast information, the broadcast information carrying the at least one of the area information corresponding to the first service or the link configuration information corresponding to the first service, to enable the terminal device to receive the at least one of the area information corresponding to the first service or the link configuration information corresponding to the first service in the broadcast information.

30. The device of any one of claims 25-29, wherein the link configuration information is valid in the first area corresponding to the area information.

31. The device of any one of claims 23-30, wherein the configuration unit is configured to: receive a request message for creating a service area for the first service from the terminal device, and configure the first area for the first service according to attribute information of the terminal device.

32. The device of claim 31, wherein the attribute information of the terminal device comprises at least one of:
terminal rank information, terminal type information, attribute information of the first service, the network slice information or terminal mobility information.

33. A device for service transmission, applied to a terminal device and comprising:
an establishment unit, configured to establish a first connection for a first service between the terminal device and a network device, a service area of the first service being a first area; and
a communication unit, configured to perform transmission of the first service between the terminal device and the network device in the first area based on the first connection for the first service, the terminal device being not required to perform a handover process when moving within the first service area.

34. The device of claim 33, further comprising:
a receiving unit, configured to receive at least one of area information corresponding to the first service or link configuration information corresponding to the first service from the network device.

35. The device of claim 34, wherein the area information comprises at least one of:
registration area list information, tracking area list information, cell list information, frequency list information, access network paging area list information, service area information or network slice information.

36. The device of claim 34 or 35, wherein the link configuration information comprises at least one of:
air interface resource configuration information, inter-network-device link configuration information, security configuration information or non-access stratum configuration information.

37. The device of any one of claims 34-36, wherein the receiving unit is configured to: send a request message for link configuration for the at least one of the area information or the link configuration information to the network device, and receive the at least one of the area information corresponding to the first service or the link configuration information corresponding to the first service from the network device.

38. The device of any one of claims 34-36, wherein the receiving unit is configured to: receive broadcast information from the network device, the broadcast information carrying the at least one of the area information corresponding to the first service or the link configuration information corresponding to the first service, and acquire the at least one of the area information corresponding to the first service or the link configuration information corresponding to the first service in the broadcast information.

39. The device of any one of claims 34-38, wherein the link configuration information is valid in the first area corresponding to the area information.

40. The device of any one of claims 34-39, further comprising:
a storage unit, configured to, after the link configuration information corresponding to the first service is received from the network device, store the link configuration information corresponding to the first service.

41. The device of claim 40, wherein the communication unit is configured to, when the terminal device is within the first area, perform the transmission of the first service between the terminal device and the network device by using the locally stored link configuration information, or receive updated link configuration information from the network device and perform the transmission of the first service between the terminal device and the network device based on the updated link configuration information.

42. The device of claim 40 or 41, wherein the storage unit is further configured to, when the terminal device moves out of the first area, delete the stored link configuration information corresponding to the first service.

43. The device of any one of claims 33-42, further comprising:
a service area request unit, configured to send a request message for creating a service area for the first service to the network device such that the network device configures the first area for the first service according to attribute information of the terminal device.

44. The device of claim 43, wherein the attribute information of the terminal device comprises at least one of:
terminal rank information, terminal type information, attribute information of the first service, the network slice information or terminal mobility information.

45. A computer storage medium having stored therein computer-executable instructions that when executed by a processor, implement the steps of the method of any one of claims 1-10 or the steps of the method of any one of claims 11-22.
